Europäisches Patentamt

(19) European Patent Office

Office européen des brevets

(11) Numéro de publication: **0 076 202**

**A1**

(12) # DEMANDE DE BREVET EUROPEEN

(21) Numéro de dépôt: **82401709.9**

(22) Date de dépôt: **21.09.82**

(51) Int. Cl.³: **F 16 D 55/224**

(30) Priorité: **25.09.81 ES 506442**

(43) Date de publication de la demande:
**06.04.83 Bulletin 83/14**

(84) Etats contractants désignés:
**DE FR GB IT**

(71) Demandeur: **BENDIBERICA S.A.**
**Balmès 243**
**Barcelona 6(ES)**

(72) Inventeur: **Boffil, Joaquim Ferret**
**Calle Mallorca 93**
**Barcelona 29(ES)**

(74) Mandataire: **Le Moenner, Gabriel et al,**
**SERVICE BREVETS BENDIX 44, Rue François 1er**
**F-75008 Paris(FR)**

(54) **Frein à disque à étrier supporté à déplacement axial sur un support fixe.**

(57) Entre l'étrier (10) chevauchant le disque de frein (2) et le support fixe (1, 3, 4) est disposé au moins un organe élastique (30) fixé à l'étrier ou au support fixe et portant en appui sur l'autre élément de façon à pouvoir se déformer élastiquement d'une quantité prédéterminée, au-delà de laquelle il est susceptible de se déplacer par rapport à l'élément auquel il n'est pas fixé, pour, dans un premier temps, exercer une force de rappel après engagement du frein tout en pouvant suivre, par glissement incrémentiel, l'usure de la garniture extérieure (8) du frein.

FIG_1

EP 0 076 202 A1

## FREIN A DISQUE A ETRIER SUPPORTE A DEPLACEMENT
## AXIAL SUR UN SUPPORT FIXE

La présente invention concerne les freins à disque à étrier coulissant , plus particulièrement pour véhicules automobiles et, de façon plus spécifique, les freins à disque du type comportant un étrier chevauchant le disque du frein et supporté sur un support fixe de façon à pouvoir se déplacer axialement par rapport au support dans lequel sont reçus en ancrage et à coulissement deux éléments de friction susceptibles de venir en engagement de friction avec les faces opposées du disque lors de la mise en oeuvre d'un moteur de frein solidaire de l'étrier agissant directement sur un premier de ces éléments de friction et indirectement, par réaction via l'étrier, sur le second élément de friction.

Il existe actuellement différents types de freins à disque à étrier dit "flottant" ou coulissant. Parmi ces systèmes, on peut signaler ceux qui emploient des jeux de rainures et de saillies complémentaires entre l'étrier et le support, disposés axialement de façon à former un agencement à tenon et mortaise avec des pièces intermédiaires, du type clavette, ayant pour but de réduire la friction. On peut également signaler les systèmes de freins à disque dans lesquels l'étrier est monté coulissant par rapport au support fixe au moyen d'au moins une colonnette axiale pourvue de manchons et de soufflets de protection ou de râcleurs. Dans ces types de freins, il existe nécessairement des jeux entre l'étrier coulissant et le support fixe afin de faciliter le mouvement relatif de l'étrier par rapport au support. Des ressorts sont fréquemment nécessaires pour empêcher l'étrier d'engendrer des bruits lors du déplacement du véhicule, lorsque le frein n'est pas actionné. Néanmoins, ce type de ressort a l'inconvénient d'empêcher le coulissement convenable de l'étrier après relâchement du frein et donc d'empêcher que l'élément de friction opposé au moteur du frein puisse s'éloigner convenablement de la face correspondante du disque. Il s'ensuit, d'une part, un couple résiduel dû au frottement de cet élément de friction et, d'autre part, des bruits engendrés par ce couple résiduel et non plus par le mouvement de l'étrier.

La présente invention a pour objet de proposer un frein à disque du type sus-mentionné, dans lequel de tels inconvénients sont évités en prévoyant au moins un organe élastique autorisant le débattement de l'étrier et assurant, dans des limites prédéterminées, un mouvement de retour de l'étrier permettant de supprimer notamment le couple résiduel après relâchement du frein, et par voie de conséquence, les bruits correspondants.

La présente invention a pour autre objet de proposer un frein à disque du type sus-mentionné dans lequel l'étrier est monté de façon véritablement flottante sur le support fixe au moyen d'organes élastiques permettant de supprimer toute liaison de forme à coulissement entre ces deux éléments.

Pour ce faire, selon une caractéristique de l'invention, le frein à disque, du type défini ci-dessus, comprend au moins un organe élastique monté sous précontrainte entre le support fixe et l'étrier et susceptible de se déformer élastiquement lors d'un déplacement relatif entre le support fixe et l'étrier jusqu'à une limite prédéterminée au delà de laquelle l'organe élastique est susceptible de se déplacer par rapport au support fixe ou à l'étrier.

Selon une caractéristique plus particulière de l'invention, l'organe élastique, typiquement en matériau élastomère, comporte une première partie fixée à un premier des éléments de la paire comprenant le support fixe et l'étrier, et une seconde partie portant appui contre une surface axial de contact de l'autre élément de ladite paire.

D'autres caractéristiques et avantages de l'invention ressortiront de la description suivante de modes de réalisation, donnés à titre illustratif mais nullement limitatif, faite en relation avec les dessins annexés, sur lequels :

- la figure 1 est une vue de dessus d'un premier mode de réalisation d'un frein à disque selon l'invention ;

- la figure 2 est une vue en bout, du côté extérieur, partiellement en coupe, du frein de la figure 1 ;

- la figure 3 est une vue en coupe selon la ligne III-III de la figure 1 ;

- la figure 4 est une vue en coupe selon la ligne IV-IV de la figure 1 ;

- la figure 5 est une vue partielle analogue à la partie gauche de la figure 1 montrant une autre variante de l'invention ;

- la figure 6 est une vue en coupe similaire à la figure 4 montrant une variante de réalisation de l'invention ;

- la figure 7 est une vue en coupe analogue aux figures 3 et 4 montrant une variante de réalisation de l'invention ;

- la figure 8 est une vue partielle du dessus de la variante de la figure 7 ;

- la figure 9 est une vue partielle en bout de la variante des figures 7 à 8 ;

- la figure 10 est une demi-vue du dessus d'un autre mode de réalisation d'un frein selon l'invention ;

- la figure 11 est une vue partielle d'une variante de réalisation du frein de la figure 10 ;

- la figure 12 est une vue en bout, de l'intérieur, d'un autre mode de réalisation d'un frein selon l'invention ;

- la figure 13 est une vue partielle en coupe suivant la ligne XIII-XIII de la figure 12 ;

- la figure 14 est une vue en coupe/similaire à la figure 13 montrant une variante de réalisation de l'invention ;

- la figure 15 est une vue du dessus d'un autre mode de réalisation d'un frein selon l'invention ;

- la figure 16 est une vue de détail d'une variante de réalisation du frein de la figure 15 ;

- la figure 17 est une vue en bout, de l'extérieur, du frein de la figure 15 ;

- la figure 18 est une vue en coupe suivant la ligne XVIII-XVIII de la figure 17 ;

- la figure 19 est une vue similaire à la figure 18, montrant une variante de réalisation de l'invention ;

Sur les figures et dans la description qui va suivre, les éléments identiques ou analogues portent les mêmes chiffres de référence, éventuellement indicés. Dans la description et les revendications, les termes "intérieur" et "extérieur" se réfèrent aux zones du frein dirigées respectivement vers l'intérieur du véhicule et vers l'extérieur une fois mis en place sur ce véhicule. Par l'expression "circonférentielle" on entend toute orientation perpendiculaire à l'axe de rotation du disque et parallèle au plan tangent supérieur du disque.

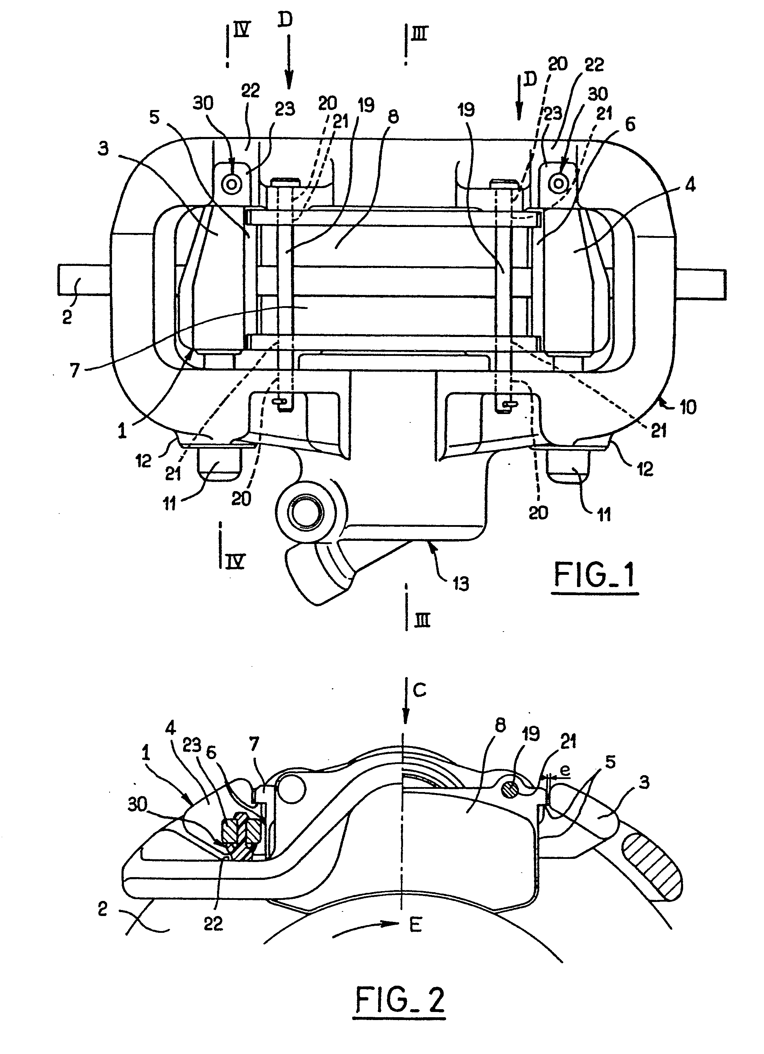

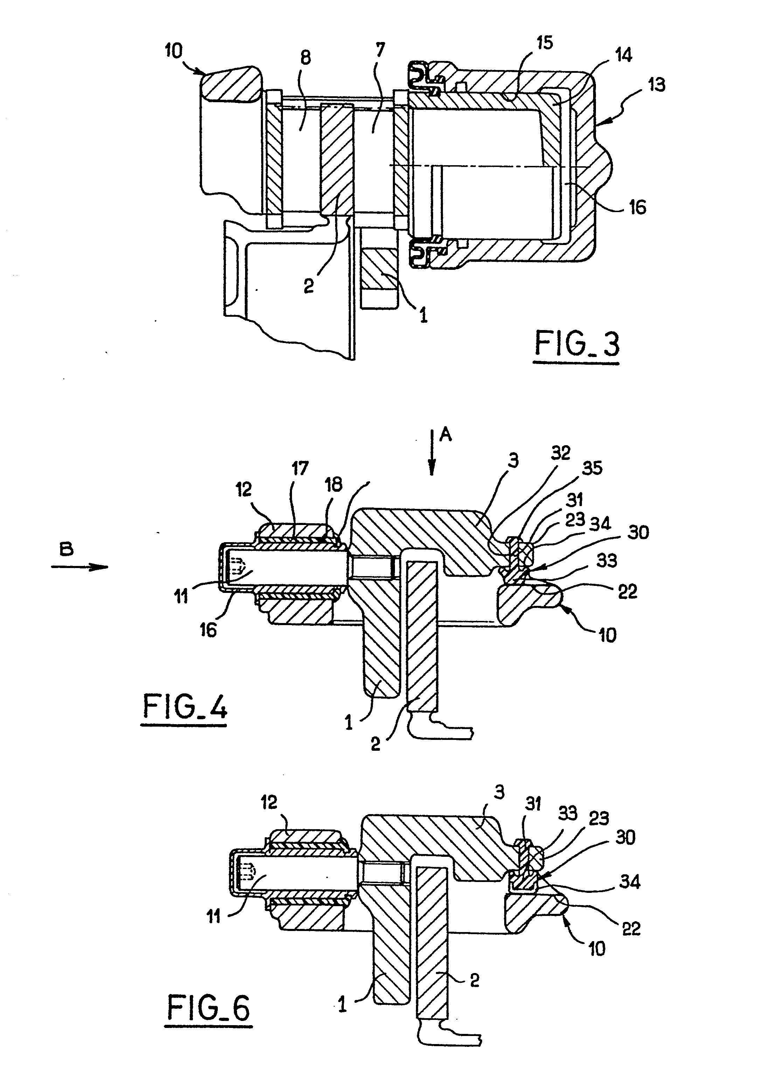

Le frein à disque représenté sur les figures 1 à 4 comporte un support fixe 1 en forme de fourche destiné à être monté sur un support de roue de véhicule (non représenté) et s'étend au voisinage d'un disque 2 prévu pour être associé en rotation à une roue du véhicule. Le support fixe définitainsi deux bras 3 et 4 dans les parties en vis-à-vis desquels sont ménagées des ouvertures d'ancrage et de coulissement 5 et 6 dans lesquelles sont reçues en ancrage et à coulissement les extrémités latérales opposées de deux éléments de friction ou patins de frein, en l'occurence un élément de friction intérieur 7 et un élément de friction extérieur 8 disposés de part et d'autre du disque 2. Dans le mode de réalisation représenté, le frein comporte un étrier 10 en forme de cadre fermé, chevauchant le disque 2 et monté à coulissement sur le support fixe 1 au moyen d'au moins une colonnette axiale, en l'occurence au moyen de deux colonnettes axiales 11 vissées, comme on le voit sur la figure 4, dans le support fixe 1 et s'étendant à travers une partie tubulaire 12 de l'étrier 10. L'étrier 10 comporte en outre des moyens d'actionnement constitués par un moteur de frein hydraulique 13 disposé du côté intérieur de l'étrier, comprenant un piston 14 coulissant dans un alésage 15 défini dans l'étrier et sensible à une pression de fluide régnant dans une chambre de commande 16 de façon à solliciter le piston 14 dans la direction vers le disque 2 pour plaquer directement l'élément de friction intérieur 7 contre le disque et, indirectement, par réaction via le corps fermé de l'étrier 10, l'élément de friction extérieur 8 contre la face opposée du disque 2. Comme on le voit sur la figure 4, chaque colonnette 11 est pourvue d'un manchon cylindrique 16 fermé extérieurement, un manchon élastique 17 étant disposé entre ce manchon 16 et l'alésage 18 de la partie tubulaire 12 de l'étrier 10. Comme on le voit sur la figure 1, l'étrier comporte en outre deux éléments d'axe 19 pontant les parties extérieure et intérieure de l'étrier en traversant des ouvertures axialement alignées 20 formées dans des pattes /de l'étrier et 21 formées dans les plaques supports des éléments de friction 7 et 8, pour lesquelles les éléments d'axe 19 jouent le rôle d'axe de guidage.

Conformément à l'invention, au moins un organe élastique 30 est monté, du côté extérieur du frein, entre l'étrier 10 et les bras 3 et 4 du support fixe 1. De façon plus spécifique, l'organe élastique 30, constitué d'un matériau élastomère, est disposé entre une surface axiale de contact 22, sensiblement plane, de l'étrier 10 et une protubérance 23 de chaque bras du support fixe s'étendant à l'aplomb de la surface de contact 22.

Dans le mode de réalisation des figures 1 à 4, l'organe élastique 30, de forme générale prismatique ou, avantageusement, de révolution, comprend une première partie ou fût 31 de diamètre réduit montée dans un orifice 32 de la saillie 23 et une seconde partie évasée, de diamètre élargi 33, prenant appui sur la surface inférieure 34 de la saillie 23 et portant sur la surface de contact 22 de l'étrier 10, l'organe élastique 30 étant maintenu en place dans l'orifice 32 par une tête d'extrémité 35.

Le montage de l'étrier 10 sur le support fixe 1 s'effectue de la façon suivante : le support fixe est d'abord équipé des organes élastiques 30. L'étrier est préalablement équipé des manchons élastiques 17 montés dans les alésages 18, le support fixe étant alors présenté suivant la flèche A de la figure 4 de manière à pouvoir visser les colonnettes 11 en les introduisant selon la flèche B de la figure 4. On introduit alors les manchons 16 entre les colonnettes 11 et les manchons 17. Il est nécessaire d'exercer un effort sur le support fixe 1 dans la direction de la flèche A pour comprimer l'organe élastique 30, plus particulièrement la seconde partie de contact évasée 33 de celui-ci. On procède ensuite au montage des éléments de friction 7 et 8 qui sont introduits entre les bras 3 et 4 du support fixe 1 suivant la flèche C de la figure 2 jusqu'à ce qu'ils viennent du support fixe 1 en appui sur les surfaces d'ancrage et de coulissement 5 et 6. On introduit alors les éléments d'axe 19 selon la flèche D de la figure 1 au travers des orifices de l'étrier et des porte-garnitures des éléments de friction, ces éléments d'axe étant finalement goupillés en place. L'opération de montage des éléments de friction impose de comprimer les organes élastiques 30 pour pouvoir introduire les axes 19.

De cette façon, les organes élastiques 30 sont montés sous précontrainte, assurant ainsi un premier rôle d'éléments anti-bruit pour l'étrier 10 et également, dans ce mode de réalisation, pour les éléments de friction 7 et 8.

Le fonctionnement du frein représenté au repos sur les figures 1 à 4 est le suivant : en appliquant une pression hydraulique dans la chambre 16, les éléments de friction 7 et 8 sont appliqués directement et indirectement, respectivement, comme on l'a vu plus haut, contre les faces opposées du disque 2. Cet engagement de friction avec le disque tournant provoque un déplacement des éléments de friction 7 et 8 dans le sens de la flèche E (figure 2), c'est-à-dire dans le sens de rotation du disque 2. En raison du léger jeu circonférentiel e entre les extrémités des éléments de friction et des ouvertures d'ancrage et de coulissemnt des bras 3 et 4 du support fixe 1, un léger mouvement de déviation de l'étrier 10 apparaît. Les organes élastiques 30, fixés au support fixe 1, vont alors fléchir au niveau de la seconde partie d'appui 33 jusqu'à ce que les éléments de friction 7 et 8 trouvent un ancrage sur le support fixe 1, c'est-à-dire en l'occurence le bras 3 dans l'exemple représenté. Cette flexion de l'organe élastique 30 est d'amplitude faible et ne provoque pas de glissement de la partie de contact 33 sur la surface de contact 22 de sorte que, au relâchement du frein, l'organe élastique 30 assure le retour latéral de l'étrier dans sa position centrale de repos représentée sur la figure 1.

En se reportant à la figure 4, on voit qu'une application de freinage provoque un déplacement de l'étrier 10 dans le sens inverse à la flèche B. De ce fait, l'organe élastique 30, plus spécifiquement la première partie de contact 33, de même que dans le cas précédent, fléchit pour tout mouvement relatif axial d'amplitude faible entre l'étrier 10 et le support fixe 1. Au relâchement du freinage, ce fléchissement provoque le recul de l'étrier 10 par rapport au support fixe 1 dans la direction de la flèche B, libérant ainsi l'élément de friction extérieur 8 de son contact avec le disque 2. Tout couple résiduel et tout bruit engendré par celui-ci disparaissent donc. Si une usure notable intervient sur l'élément de friction extérieur 8, l'amplitude du déplacement axial relatif entre l'étrier 10 et le support fixe 1 augmente. Or, l'organe élastique 30 ne peut fléchir que d'une quantité déterminée pour suivre le déplacement de l'étrier 10. Il s'ensuit alors un glissement entre la partie de contact 33 de l'organe élastique et la surface de contact 22 de l'étrier 10 de manière à ce que l'organe élastique 30 vienne occuper une nouvelle position relative par rapport à cette surface de contact 22 de l'étrier 10, analogue à la position relative préalable au glissement incrémentiel ainsi opéré. Au relâchement du frein, l'élément élastique 30 fait reculer, dans le sens de la flèche B, l'étrier 10 de la même valeur qu'avant son glissement par rapport audit étrier.

On voit ainsi que, dans ce mode de réalisation, l'élément élastique 30 assure le quadruple rôle suivant : anti-bruit pour l'étrier, anti-bruit pour les éléments de friction, recentrage de l'étrier dans le sens transversal ou circonférentiel après application de freinage, et recul contrôlé de l'étrier pour dégager l'élément de friction extérieur 8 du disque 2.

Dans la variante de réalisation représentée sur la figure 5, l'organe élastique 30 est constitué par un bloc manchon profilé muni d'un alésage interne avec épaulement servant à son montage sur la protubérance 23 au moyen d'un boulon our rivet 24.

La variante de réalisation de la figure 6 se distingue de celle de la figure 4 en ce sens que la partie de contact 33 de l'organe élastique porte à son extrémité inférieure une pièce de renfort 34 permettant de contrôler d'une manière plus fine le fléchissement de la partie de contact 33 avant que n'apparaisse le glissement relatif entre celle-ci et la surface de contact 22 de l'étrier 10.

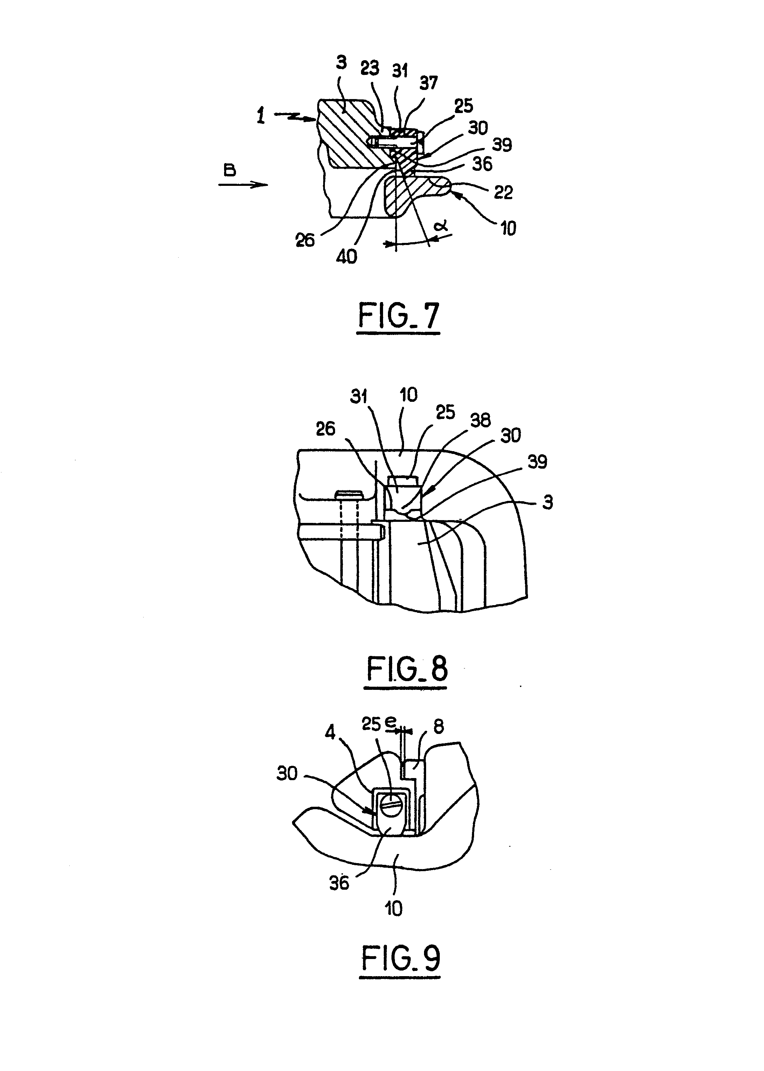

Dans le mode de réalisation des figures 7 à 9, l'organe élastique 30 comporte une partie de corps de montage en forme de bloc prismatique 35 prolongé par une saillie formant lèvre épaisse 36 destinée à porter contre la surface de contact 22 de l'étrier 10. La partie de montage 35 comporte un orifice traversant 37 destiné au passage d'une vis 25 pour son montage en appui contre une face externe 26 de la saillie 23 du support fixe 1. Pour garantir un bon positionnement radial de l'organe élastique 30, la partie de corps de montage 35 comporte une protubérance 38 reçue dans un évidement correspondant de la face d'appui 26. Comme on le voit bien sur la figure 7, la lèvre épaisse de contact 36 comporte un flanc intérieur 40 écarté d'un angle $\alpha$ de la face de montage 26 de la saillie 23. L'organe élastique des figures 7 à 9 est mis en oeuvre exactement de la même façon que précédemment. Dans cette variante, le glissement de la partie de contact 36 avec la surface de contact 22 est parfaitement maîtrisé dans la mesure où, lorsque l'amplitude du mouvement axial de l'étrier 10 par rapport au support fixe 1 est telle que l'angle $\alpha$ devienne nul par suite du fléchissement de la lèvre de contact 36, le glissement se produit alors de manière à ce que l'organe élastique 30 reprenne une nouvelle position relative par rapport à l'étrier 10. Au relâchement du frein, l'organe élastique 30 peut même reculer dans le sens de la flèche B, l'étrier 10 de la valeur correspondante à celle donnée par l'angle $\alpha$ , c'est-à-dire la même qu'avant le glissement.

Dans le mode de réalisation des figures 1 à 9, avec étrier en forme de cadre fermé, si le support fixe 1 comporte une portion reliant les deux extrémités des bras 3 et 4 un seul organe élastique 30 peut être prévu au niveau de l'axe médian du frein.

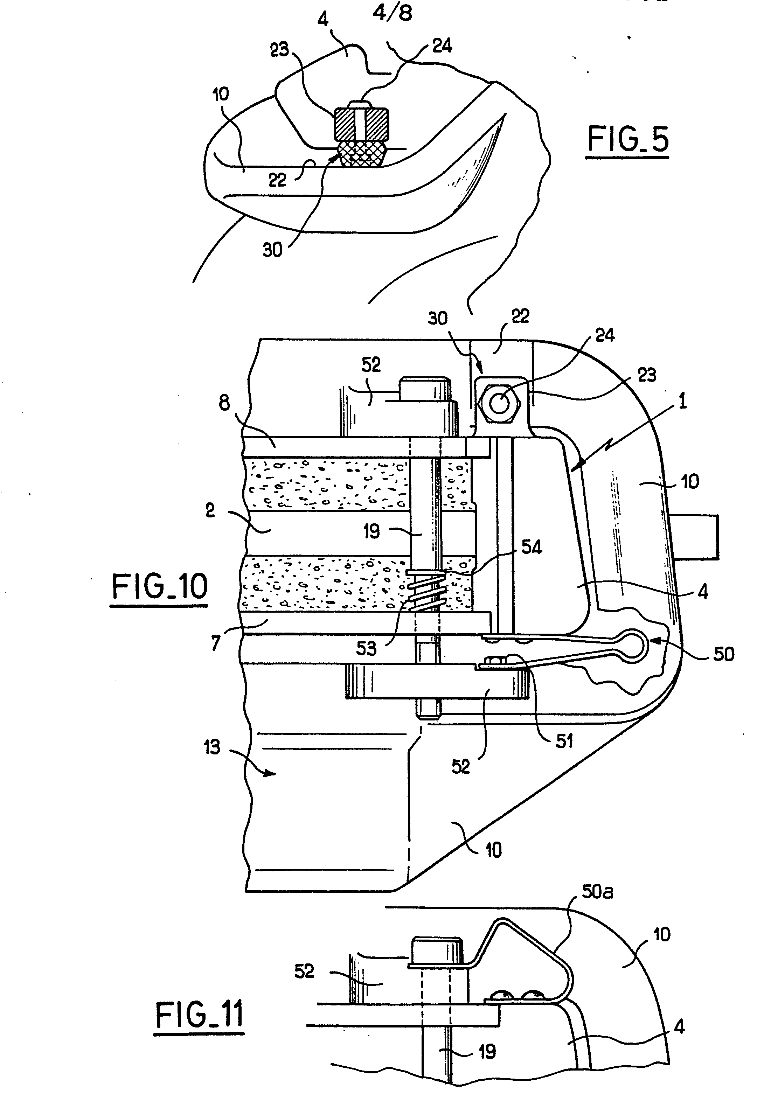

Le mode de réalisation des figures 10 et 11 est dans son ensemble similaire à celui décrit en relation avec les figures 1 à 4, si ce n'est que, du côté intérieur du frein, l'étrier 10, également en forme de cadre fermé, est relié aux bras 4 et 3 du support fixe 1 par une lame d'acier à ressort 50 en forme d'épingle à cheveu dont une des branches est rivetée sur le bras 4 et l'autre branche est vissée par une vis 51 sur une saillie s'étendant vers le haut 52 de l'étrier 10 servant au passage de l'élément d'axe 19, l'organe élastique 30 étant similairement monté sur la protubérance 23 du côté extérieur du bras 4. Dans ce mode de réalisation, le patin intérieur 7 est sollicité à l'écart du disque 2 par un ressort 53 monté sur l'élément d'axe 19 prenant appui sur une rondelle 54 emmanchée sur ce dernier. Le patin extérieur 8 est avantageusement fixé à la partie extérieure 110 de l'étrier 10. Dans la variante de la figure 11, l'un des organes élastiques en matériau élastomère 30 a été substitué par une lame élastique additionnelle 50a rivetée sur le bras 4 du support fixe 1 et solidarisée à la partie extérieure 110 de l'étrier 10 en étant enfilée sur l'élément d'axe 19 entre la tête de ce dernier et la saillie radiale vers le haut 52 de la partie extérieure 110 de l'étrier 10. Selon un aspect de l'invention, dans ce dernier cas, les lames élastiques 50 et 50a convenablement dimensionnées, peuvent suffire au montage flottant de l'étrier 10 sur le support fixe 1, en permettant ainsi de supprimer les colonnettes de guidage.

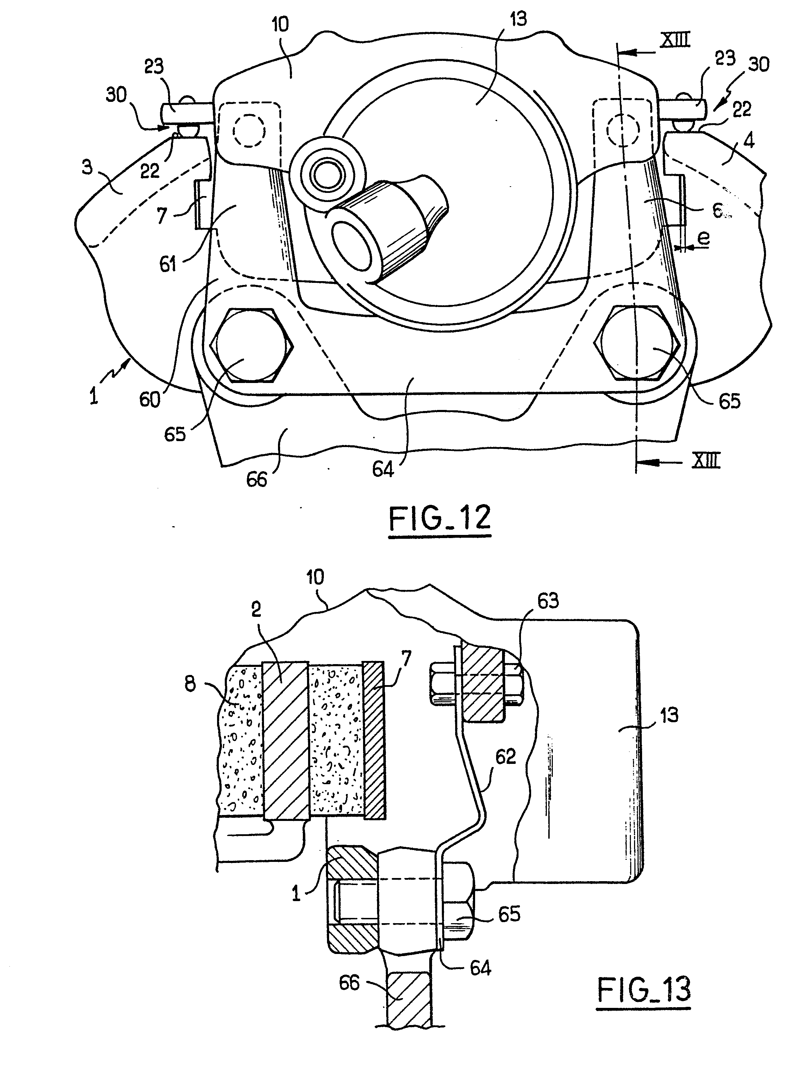

Le mode de réalisation des figures 12 et 13 relève de cette dernière technique. L'étrier 10, réalisé ici sous la forme d'une pince chevauchant le disque, en passant entre les deux bras 3 et 4 du support fixe 1, est supporté de façon à se déplacer axialement par rapport à ce dernier par un feuillard en forme de U 60, découpé dans une plaque d'acier à ressort, les extrémités des branches 61 et 62 du U étant fixées à l'étrier 10 par des boulons 63, la base 64 du U étant fixée, à ses extrémités opposées, au support fixe 1 par les boulons 65 de montage de ce support fixe sur le porte-fusée 66 de support de roue du véhicule. Comme on le voit sur la figure 13, les branches 61 et 62 du feuillard 60 sont profilées de façon que les lames élastiques qu'il constitue soient montées avec une pré-contrainte axiale lorsque les éléments de friction 7 et 8 ont des garnitures neuves, cette pré-contrainte s'annulant sensiblement lorsque les garnitures des éléments de friction sont sensiblement à la valeur moitié de leur usure nominale admissible.

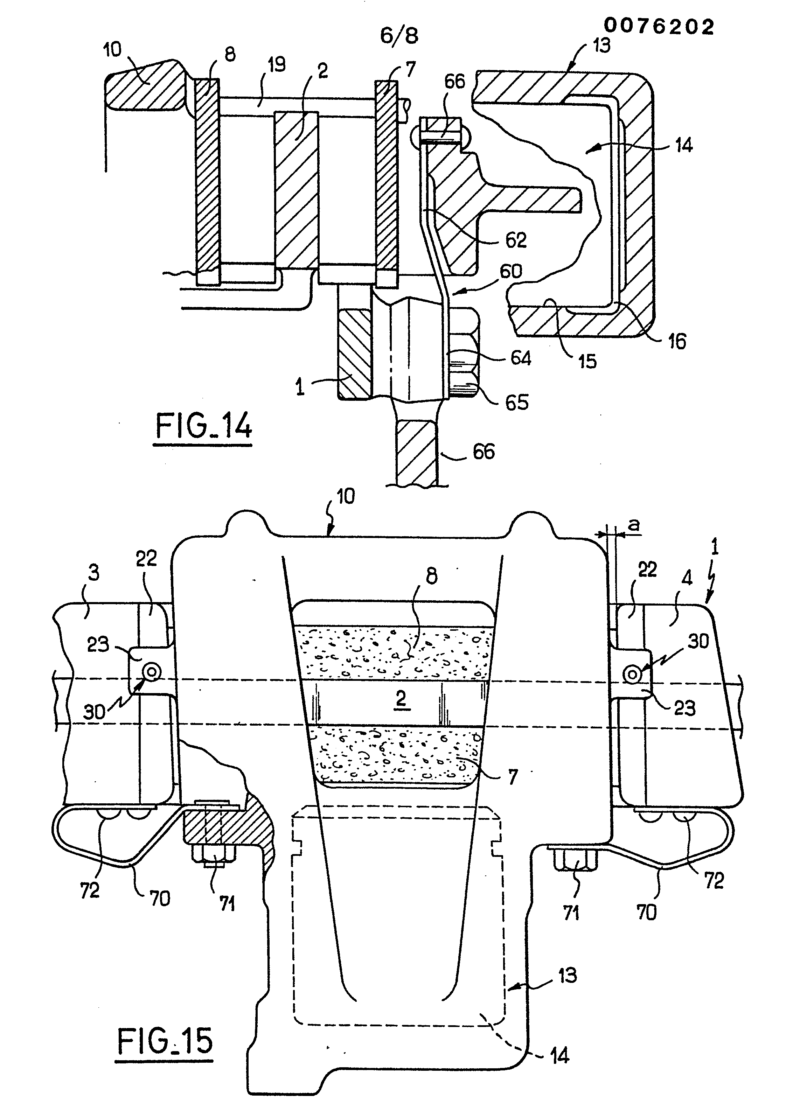

La figure 14, similaire à la figure 13, montre un montage analogue pour un étrier 10 en forme de cadre fermé comme dans les modes de réalisation des figures 1 à 11, les branches 61 et 62 du feuillard en U 60 étant fixées par des rivets 66 sur la face interne de la partie intérieure de l'étrier 10.

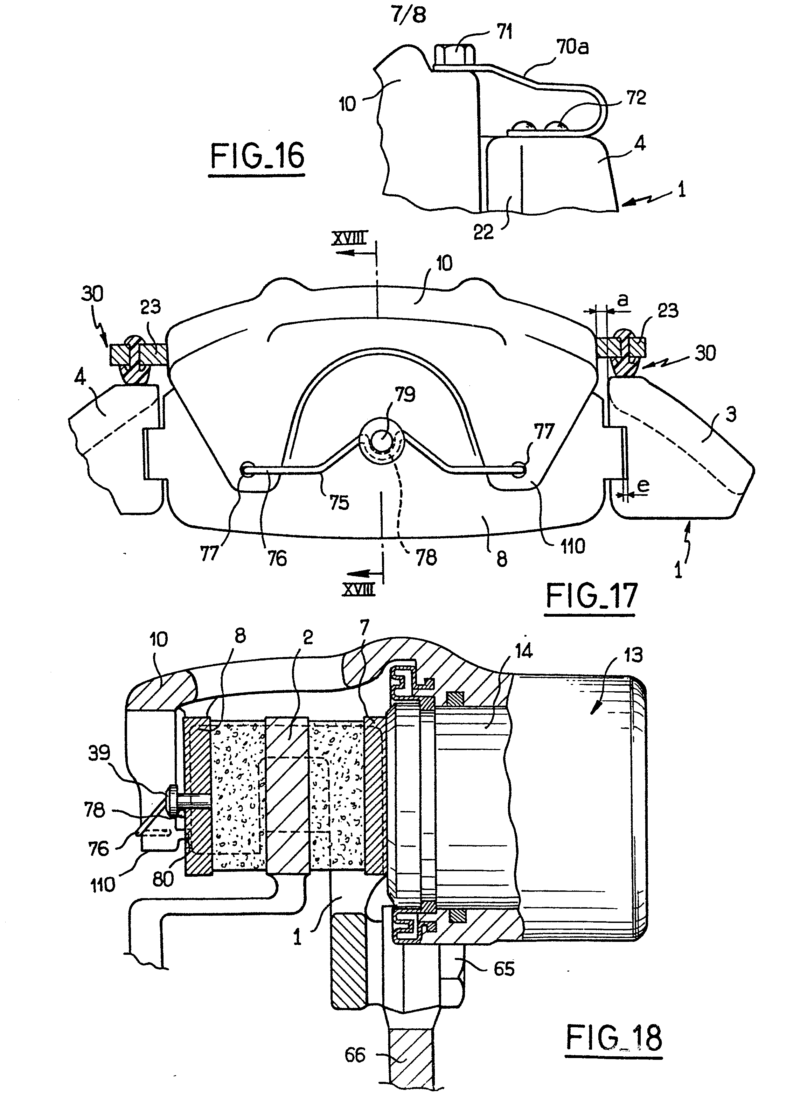

Le mode de réalisation représenté sur la figure 15 est similaire à celui des figures 12 et 13, c'est-à-dire avec un étrier 10 en forme de pince, lequel est supporté cette fois sur les bras 3 et 4 du support fixe 1 par une paire de lames élastiques transversales recourbées 70 dont la branche intérieure est fixée par des vis 71 sur une passe de la partie intérieure de l'étrier 10 et dont la branche extérieure, repliée vers l'intérieur, est fixée par des rivets 72 sur la face intérieur du bras 3 ou 4 du support fixe 1, les organes élastiques 30, identiques aux modes de réalisation précédents, étant ménagés ici entre des pattes latérales 23 de l'étrier 10 et les surfaces de contact 22 formées sur la partie supérieure des bras 3 et 4. Dans la variante représentée sur la figure 16, l'agencement précédent est complété par des lames élastiques supplémentaires 70a analogues aux lames élastiques 70 précédentes mais disposées entre les parties extérieures adjacentes de l'étrier 10 et des bras 4 et 3 du support fixe 1.

Comme on le voit sur les figures 17 et 18, dans ce mode de réalisation, le patin extérieur 8 est solidarisé à la partie extérieure ou nez 110 de l'étrier 10 par un ressort en fil 75 dont les branches 76 comportent des extrémités repliées vers l'intérieur reçues dans des trous axiaux 77 du nez 110 de l'étrier 10 et dont la partie centrale, décalée vers l'intérieur par rapport au plan des extrémités des branches 76, forme une demi-boucle 78 engagée autour d'un pion à tête 79 fixée dans la plaque support de garnitures de l'élément de friction extérieur 8 et s'étendant axialement vers l'extérieur par rapport à ce dernier, le patin extérieur 8 étant en outre positionné dans le nez 110 de l'étrier 10 par des formations complémentaires coopérantes en creux et en relief comme figuré en 80.

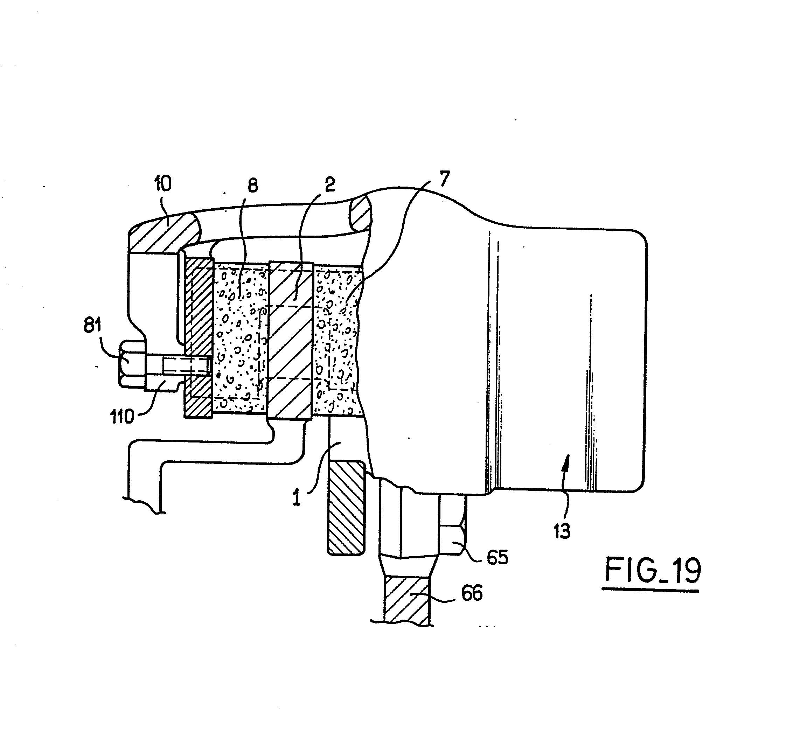

La solidarisation de l'élément de friction extérieur 8 au nez 110 de l'étrier peut être réalisée par des vis ou rivets tels que 81, comme représenté sur la figure 19 par ailleurs identique à la figure 18.

De façon spécifique, dans le cas d'un montage purement flottant de l'étrier 10 sur le support 1 au moyen de lames élastiques telles que 50, 61-62, 70-70a, susceptibles de se déformer élastiquement pour permettre le déplacement axial de l'étrier 10 par rapport au support fixe 1, mais également légèrement en torsion lors de l'application d'un effort de freinage, le jeu circonférentiel $e$ entre les éléments de friction 7 et 8 et les ouvertures d'ancrage et de coulissement 5, 6 desdits éléments de friction dans le support fixe 1 est inférieur au jeu circonférentiel minimum $a$ entre les surfaces latérales de l'étrier 10 et une quelconque partie adjacente du support fixe 1 (3, 4), de façon que, lors de l'engagement en friction des éléments de friction 7 et 8 avec le disque lors des opérations de freinage, le débattement latéral de l'étrier 10 sous l'effet de la déformation transversale des lames élastiques ne vienne jamais faire porter l'étrier latéralement contre le support fixe 1 tandis que le jeu latéral e entre les éléments de friction et le support fixe est rapidement comblé lors de cet engagement lors d'une phase de freinage, les lames élastiques, après cessation de cette déformation en torsion latérale, étant à-même de ramener l'étrier 10 dans sa position initiale, c'est-à-dire dans une position centrée par rapport au support fixe, après cessation d'une phase de freinage. Typiquement, le jeu a est d'au moins deux fois supérieur au jeu e.

La présente invention n'est pas limitée aux modes de réalisation décrits mais est susceptible de modifications et de variantes qui apparaîtront à l'homme de l'art.

## REVENDICATIONS

1. Frein à disque, comportant un étrier (10) chevauchant le disque (2) de frein et supporté sur un support fixe (1, 3, 4) de façon à pouvoir se déplacer parallèlement à l'axe du disque par rapport au support fixe dans lequel sont reçus en ancrage et à coulissement deux éléments de friction (7, 8) susceptibles de venir en engagement de friction avec les faces opposées du disque lors de la mise en oeuvre d'un moteur de frein (13), solidaire de l'étrier, agissant directement sur un premier (7) des éléments de friction et indirectement, par réaction via l'étrier, sur le second (8) élément de friction, caractérisé en ce qu'il comprend au moins un organe élastique (30) monté sous précontrainte entre le support fixe (1, 3, 4) et l'étrier (10) et susceptible de se déformer élastiquement lors d'un déplacement relatif entre le support fixe et l'étrier jusqu'à une limite prédéterminée au delà de laquelle l'organe élastique est susceptible de se déplacer par rapport au support fixe ou à l'étrier.

2. Frein à disque selon la revendication 1, caractérisé en ce que l'organe élastique (30) comporte une première partie (31) fixée à un premier (1, 3, 4) des éléments de la paire comprenant le support fixe et l'étrier, et une seconde partie (33, 36) portant en appui contre une surface axiale de contact (22) de l'autre (10) élément de ladite paire.

3. Frein à disque selon la revendication 2, caractérisé en ce que l'organe élastique (30) est réalisé en un matériau élastomère.

4. Frein à disque selon la revendication 3, caractérisé en ce que la première partie (31) de l'organe élastique (30) est emmanchée dans un orifice (32) formé dans une saillie (23) dudit premier élément (1, 3, 4), la seconde partie (33) se présentant sous la forme d'un évasement prenant appui sur la base (34) de ladite saillie (23).

5. Frein à disque selon la revendication 3, caractérisé en ce que la première partie (31) de l'organe élastique (30) se présente sous la forme d'un bloc traversé par un moyen de fixation (25) pour sa fixation sur une face (26) du premier élément (1, 3, 4) de ladite paire, la seconde partie (36) étant constituée par une saillie amincie s'étendant vers l'autre élément (10) de la paire.

6. Frein à disque selon la revendication 5, caractérisé en ce que ladite saillie (36) comporte un flac incliné (40) s'écartant normalement, en position de montage, de ladite face (26) du premier élément (1, 3, 4) de ladite paire.

7. Frein à disque selon l'une des revendications 1 à 6, caractérisé en ce que l'organe élastique (30) s'étend sensiblement radialement entre le support fixe (1, 3, 4) et l'étrier (10).

8. Frein à disque selon la revendication 7, caractérisé en ce que l'organe élastique (30) est disposé du côté extérieur du frein.

9. Frein à disque selon la revendication 8, caractérisé en ce qu'il comprend deux organes élastiques (30) de chaque côté, latéralement, du second élément de friction (8).

10. Frein à disque selon l'une des revendications précédentes, caractérisé en ce que l'étrier (10) est supporté sur le support fixe (1, 3, 4) par un moyen de lame élastique flexible (50, 50a; 60, 61, 62 ; 70, 70a).

11. Frein à disque selon la revendication 10, caractérisé en ce que le moyen de lame élastique (60) présente la forme d'un U dont la base (64) est fixée au support fixe (1) et les extrémités des branches (61, 62) sont fixées à l'étrier (10).

12. Frein à disque selon l'une des revendications 1 à 9, caractérisé en ce que l'étrier (10) est supporté à coulissement axial sur le support fixe (1, 3, 4) au moyen d'au moins une colonnette axiale (11).

13. Frein à disque selon l'une des revendications précédentes, caractérisé en ce que l'étrier (10) a une forme de cadre fermé en travers duquel s'étendent deux éléments d'axes (19) traversant les éléments de friction (7, 8).

1/8

0076202

FIG_1

FIG_2

0076202

FIG_3

FIG_4

FIG_6

FIG. 7

FIG. 8

FIG. 9

0076202

FIG.5

FIG.10

FIG.11

FIG_12

FIG_13

## FIG.14

## FIG.15

0076202

7/8

FIG_16

FIG_17

FIG_18

0076202

FIG_19

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | DE - U - 7 528 084 (MAGENWIRTH) <br> * revendications 1 à 4; fig. 5 * | 1-3,7, 12 | F 16 D 55/224 |
| A | US - A - 3 500 966 (BIRGE) <br> * fig. 1 à 5 * | 1,10,11 | |
| A | FR - A1 - 2 283 358 (GIRLING) | | |
| A | FR - A - 1 589 504 (D.B.A.) | | |
| A | US - A - 4 067 418 (RATH et al.) | | |

**DOMAINES TECHNIQUES RECHERCHES (Int. Cl. 3)**

F 16 D 55/00

F 16 D 65/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| Berlin | 17-12-1982 | LUDWIG |

OEB Form 1503.1 06.78